# EUROPÄISCHE PATENTSCHRIFT

(11) **EP 3 938 244 B1**
(45) Veröffentlichungstag und Bekanntmachung des Hinweises auf die Patenterteilung: **09.10.2024**
(21) Anmeldenummer: 20711810.0
(22) Anmeldetag: 04.03.2020
(51) Int. Cl.: B60Q 3/62

(54) **BELEUCHTUNGSEINHEIT FÜR EIN KRAFTFAHRZEUG**
LIGHTING UNIT FOR A MOTOR VEHICLE
UNITÉ D'ÉCLAIRAGE POUR UN VÉHICULE AUTOMOBILE

(30) Priorität: 14.03.2019 DE 102019203502
(43) Veröffentlichungstag der Anmeldung: 19.01.2022
(73) Patentinhaber: VOLKSWAGEN AKTIENGESELLSCHAFT, 38440 Wolfsburg (DE)
(72) Erfinder: FRANKE, Stefan, 38536 Meinersen (DE)
(74) Vertreter: Clarenbach, Carl-Philipp
(86) Internationale Anmeldenummer: PCT/EP2020/055685
(87) Internationale Veröffentlichungsnummer: WO 2020/182573

(56) Entgegenhaltungen:
- EP-A1- 1 743 801
- EP-A1- 1 832 902
- EP-A1- 3 018 401
- DE-A1- 102015 220 843
- DE-U1- 202015 001 084
- US-A1- 2013 058 112

## Beschreibung

Die Erfindung betrifft eine Beleuchtungseinheit für ein Kraftfahrzeug mit den Merkmalen vom Oberbegriff des Patentanspruchs 1.

Eine derartige Beleuchtungseinheit ist aus der US 8 164 016 B2 bekannt geworden. Darin wird ein Start/Stoppschalter für ein Kraftfahrzeug beschrieben, welcher eine Beleuchtungseinheit, die aus einer Leiterplatte mit mehreren LEDs und den LEDs zugeordneten Lichtleitern besteht. Die Verbindung zwischen der Leiterplatte und den Lichtleitern erfolgt über eine Rastverbindung.

Aus der DE 10 2013 018 784 A1 ist eine längsförmige Beleuchtungsvorrichtung eines Fahrzeugs bekannt geworden. Konkret weist das offenbarte Kraftfahrzeug eine längsförmige Beleuchtungseinrichtung zum Erzeugen eines Leuchtstreifens entlang einer vorgegebenen Strecke der Beleuchtungseinrichtung auf. Dazu weist die Beleuchtungsvorrichtung einen ebenso längsförmigen Lichtleiter auf, in den Licht von Leuchtdioden einkoppelbar ist. Ein erster Abschnitt der Beleuchtungseinrichtung ist am Interieur des Fahrzeugs und ein zweiter Abschnitt an einem äußeren Bauteil des Kraftfahrzeugs, beispielsweise an einer Fahrzeugtür, einer Motorhaube oder einem Außenspiegel angeordnet ist.

In der EP 0 818 652 A2 ist eine Beleuchtungsleiste mit einem mehradrigen Leiterstreifen beschrieben, der mit in Reihe hintereinander angeordneten Leuchtdioden bestückt ist. Der Leiterstreifen besteht aus einer Vielzahl von abgelängten, in axialer Richtung aneinander gereihten Leiterstreifenabschnitten. Zwischen zwei axial aneinandergrenzenden Leiterstreifenabschnitten ist jeweils eine mit einer Leuchtdiode bestückte Leiterplatte mit diesen elektrisch leitend verbunden. Die elektrische Verbindung zwischen den Leiterstreifen und Kontakten der Leiterplatte erfolgt über eine Crimp- und eine Nietverbindung. Die Herstellung der mit dem Leiterplatten verbundenen Leiterstreifen wird über mehrere Fertigungsstationen in der Form eines Endlosstreifens bewerkstelligt.

Schließlich wird in der US 7 477 140 B1 eine Beleuchtungseinrichtung für ein Kraftfahrzeugfenster beschrieben. Die Beleuchtungsvorrichtung weist eine Vielzahl von matrixartig angeordneten Leuchtpixeln auf, die durch Leuchtdioden gebildet werden, welche entlang von zeilenartig untereinander angeordneten Leiterplatten, welche sich über die Längsrichtung der Anzeigevorrichtung erstrecken, angeordnet sind.

Gattungsgemäße Beleuchtungseinheiten sind auch in den Offenlegungsschriften DE 10 2015 220 843 A1 und EP 1 743 801 A1 offenbart.

Der vorliegenden Erfindung liegt die Aufgabe zu Grunde, eine Beleuchtungseinheit für ein Kraftfahrzeug bereitzustellen, welche im Innenraum eines Kraftfahrzeugs im Bereich einer Frontscheibe eine gute Signalwirkung für einen Fahrzeuginsassen bereitstellen kann, dem Verlauf der Frontscheibe in Fahrzeugquerrichtung angepasst ist und dennoch kostengünstig herstellbar ist.

Vorliegende Aufgabe wird mit einer Beleuchtungseinheit mit den Merkmalen von Patentanspruch 1 gelöst. Vorteilhafte Ausbildungen der Erfindung sind den jeweils abhängigen Ansprüchen zu entnehmen.

Die Erfindung geht zunächst aus von einer Beleuchtungseinheit für ein Kraftfahrzeug, vorzugsweise für den Innenraum des Kraftfahrzeugs, aus wenigstens einem Lichtleiter und wenigstens einer wenigstens eine Leuchtdiode aufweisenden Leiterplatte. Die Leiterplatte und der Lichtleiter sind aneinander befestigt.

Die Erfindung sieht nun vor, dass die Beleuchtungseinheit längsförmig und sichelartig gebogen ausgebildet ist mit einem sich über die Länge der Beleuchtungseinheit erstreckenden Lichtleiter. Ferner weist die Beleuchtungseinheit mehrere längliche, starre Leiterplatten auf, die jeweils mit mehreren Leuchtdioden bestückt sind, wobei die Leiterplatten identisch aufgebaut und in ihrer Längsrichtung entlang dem Lichtleiter aneinandergereiht sind, derart, dass das Licht der Leuchtdioden senkrecht zur Längserstreckung des Lichtleiters in diesen einkoppelbar ist. Dabei sind die Leiterplatten über Kabel elektrisch und signaltechnisch miteinander verbunden. Zur elektrischen Kontaktierung können die Kabel mit den Leiterplatten bspw. verlötet oder über Steckverbinder verbunden sein.

Auf diese Weise wird eine Beleuchtungseinheit bereitgestellt, die als längliche Beleuchtungseinheit im Bereich einer Frontscheibe eine gute Signalwirkung für einen Fahrzeuginsassen erzeugen kann und kostengünstig auf unterschiedliche Scheibenkrümmungen auf Grund von vorgegebenen Designanforderungen anpassbar ist. Dennoch ist es möglich, für unterschiedliche Fahrzeugtypen die gleichen Elektronikkomponenten zu benutzen.

Denn durch die flexible elektrische Anbindung der Leiterplatten an ihren Enden sowie die elektrische Verbindung mittels Steckverbindern wird eine leichte Anpassung an die erforderlichen Geometrien gewährleistet.

Eine erste Weiterbildung der Erfindung schlägt vor, dass die Leiterplatten über die Kabel im Bereich ihrer gegenüberliegenden Enden verbunden sind, wobei die gegenüberliegenden Enden aneinander anliegen oder allenfalls nur in einem solchen geringen Abstand gegenüberliegen, der ein Vielfaches kleiner ist als eine Länge einer Leiterplatte.

Diese Ausgestaltung ermöglicht trotz Verwendung mehrerer Leiterplatten eine gleiche Beabstandung der Leuchtdioden auch im Übergangsbereich zwischen den Leiterplatten.

Erfindungsgemäß weist jede Leiterplatte im Umriss eine gebogene Form mit einem Krümmungsradius auf. Diese Ausgestaltung trägt dazu bei, dass die Leiterplatten auf leichtere Weise einer gewünschten Kontur der Beleuchtungseinheit angepasst werden können.

Durch die Verwendung von starren Leiterplatten können diese präzise zum Lichtleiter positioniert werden. Der Lichtleiter selbst kann als Spritzgussformteil eine Geometrie aufweisen, die unterschiedliche Positionen der LEDs relativ zu einer Lichtaustrittsfläche, welche sich ebenfalls in Längsrichtung des Lichtleiters und damit der Beleuchtungseinheit hinzieht, kompensiert.

Es ist denkbar, dass jede Leiterplatte mehrere Treibereinheiten aufweist, wobei jeder Treibereinheit ein Teil von den mehreren Leuchtdioden der Leiterplatte zugeordnet ist. Hierdurch wird die Voraussetzung geschaffen, dass das Handling für die Montage und für die Verbindung der einzelnen Leiterplatten mit dem Lichtleiter erleichtert wird. Die Teile der durch die Treibereinheiten angesteuerten Leuchtdioden sind in der Anzahl vorzugsweise gleich.

So ist denkbar, dass drei Leiterplatten vorhanden sind und auf jeder Leiterplatte 18 Leuchtdioden und drei Treibereinheiten angeordnet sind. Jede Treibereinheit treibt dabei sechs Leuchtdioden elektrisch und signaltechnisch an, ist also diesen zugeordnet.

Es ist auch vorstellbar, dass jede Leiterplatte eine Treibereinheit aufweist, wobei der Treibereinheit alle Leuchtdioden der Leiterplatte zur Ansteuerung zugeordnet sind. Diese Ausgestaltung ermöglicht eine kürzere Länge der Leiterplatten und damit eine erhöhte Flexibilität in der Ausrichtung.

Für diesen Fall ist denkbar, dass bei der Beleuchtungseinheit neun Leiterplatten vorhanden sind und auf jeder Leiterplatte sechs Leuchtdioden angeordnet sind, die der auf der Leiterplatte vorhandenen Treibereinheit zur Ansteuerung zugeordnet sind.

Eine andere Weiterbildung schlägt vor, dass die Leiterplatten derart aneinandergereiht sind, dass die Krümmung wenigstens einer Leiterplatte der Krümmung einer anderen Leiterplatte entgegengerichtet ist. Hierdurch wird es ermöglicht auch eine Beleuchtungseinheit mit nur einer äußerst geringen Biegung zu realisieren.

Die vorliegende Erfindung soll auch ein Kraftfahrzeug unter Schutz stellen, welche mit wenigstens einer erfindungsgemäßen Beleuchtungsvorrichtung ausgestattet ist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Figuren 1: zwei Beleuchtungseinheiten mit unterschiedlichen Krümmungsradien,
- Figuren 2: die Darstellung einer unterschiedlichen Ausrichtung von starren, aneinander gereihten Leiterplatten gemäß unterschiedlichen Radien der Beleuchtungseinheiten und
- Figur 3: einen Schnitt gemäß Schnittverlauf II aus Fig. 1a.

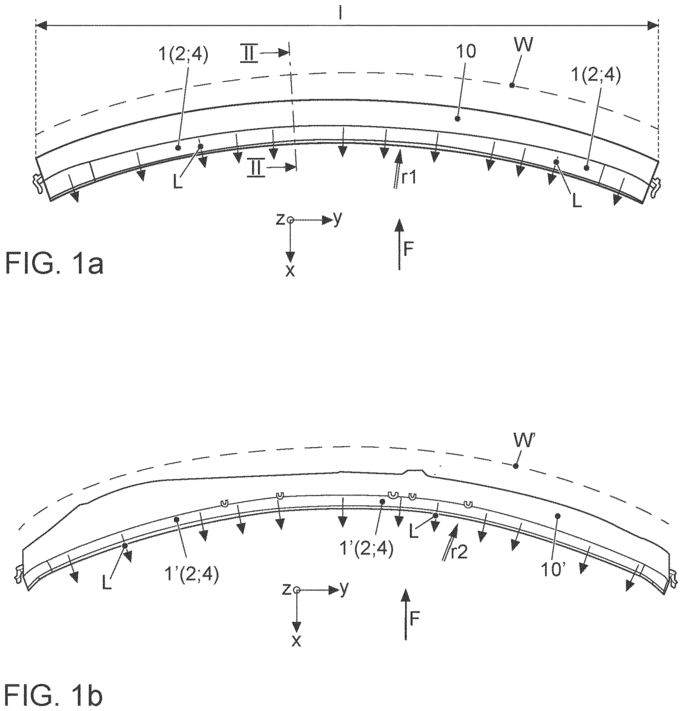

Die Fig. 1a zeigt ein erstes Ausführungsbeispiel für eine Beleuchtungseinheit 1, wobei unter einem blendenartigen Bauteil 10 die Beleuchtungseinheit 1 angeordnet ist.

Das blendenartige Teil 10 ist im Bereich einer Windschutzscheibe W angeordnet, von der nur der Strakverlauf angedeutet ist.

Die Beleuchtungseinheit 1 erstreckt sich über die gesamte Länge I des blendenartigen Bauteils 10. Die Länge I kann sich beispielsweise über einen wesentlichen Teil einer Instrumententafel (nicht gezeigt) im Bereich der Windschutzscheibe W entlang ziehen.

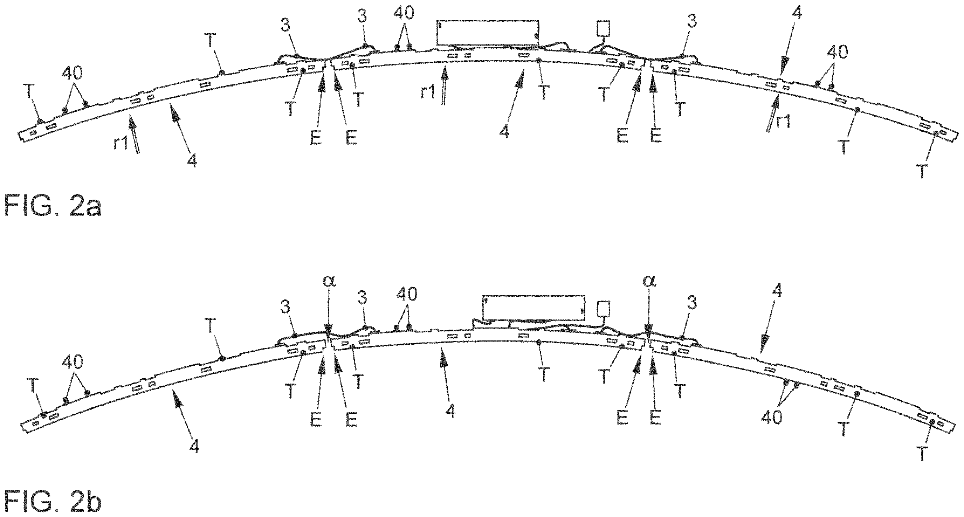

Die Beleuchtungseinheit 1 besteht nun aus einem langgestreckten, ebenso sichelförmig gebogenen Lichtleiter 2 (vgl. Fig. 2), an dem drei Leiterplatten 4 befestigt, vorzugsweise verklipst sind.

Die Leiterplatten 4 sind jeweils im Bereich ihrer Enden so aneinandergelegt, dass sie insgesamt den Radius r1 der Beleuchtungseinheit 1 beziehungsweise die gebogene Form des Lichtleiters 2 nachführen.

Jede der Leiterplatten 4 ist als starre Leiterplatte ausgebildet, wobei alle drei Leiterplatten 4 einen identisch Radius r1 aufweisen.

Die Leiterplatten 4 liegen mit ihren gegenüberliegenden Enden E aneinander an und bilden so insgesamt den gewünschten Radius r1 aus.

Im Ausführungsbeispiel weist jede Leiterplatte 4 drei Treiberbausteine T zur Ansteuerung von auf den Leiterplatten 4 angeordneten Leuchtdioden 40 auf. Dabei steuert jeweils eine Treibereinheit T genau sechs Leuchtdioden 40 an. Somit sind durch die drei aneinander gereihten Leiterplatten 4 insgesamt 54 Leuchtdioden ansteuerbar und sichelförmig unter einer Lichteinkoppelfläche des Lichtleiters 2 angeordnet.

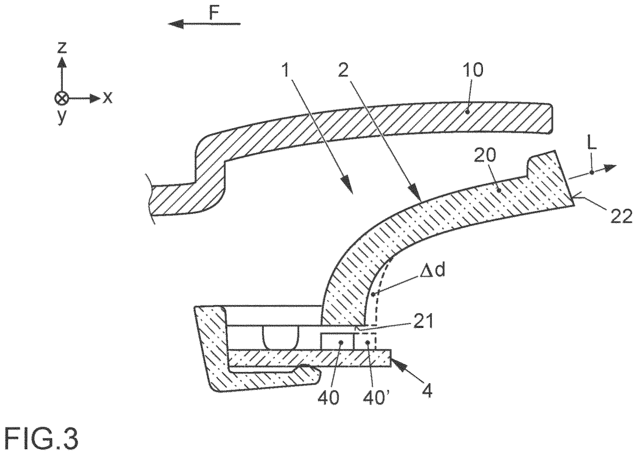

Ein durch unterschiedliche Winkelstellungen der Leiterplatten 4 zueinander bedingter Winkelversatz α von aufeinander in Längsrichtung l aufeinander folgenden Leuchtdioden 40, 40' (vergleiche Fig. 2) kann an den gegebenen Stellen durch eine entsprechende Dickenveränderung Δd eines Grundkörpers 20 vom Lichtleiter 2 im Bereich der Lichteinkoppelfläche 21 ausgeglichen werden. Dabei sind in Fig. 3 eine Leuchtdiode 40 in der Schnittebene und eine danach folgende Leuchtdiode 40' mit einem Winkelversatz α dargestellt.

In der Fig. 2b ist eine Aneinanderreihung der drei Leiterplatten 4 in einem etwas engerem Krümmungsradius r2 dargestellt, so wie er für eine stärker gekrümmte Beleuchtungseinheit 1' in einem blendenartigen Bauteil 10' notwendig ist.

Wie anhand von Fig. 2b ersichtlich ist, stehen zur Erzielung des Krümmungsradius r2 die gegenüberliegenden Enden E zweier aneinander gereihter Leiterplatten 4 etwas auseinander. Der Abstand ist allerdings nur geringfügig und um ein Vielfaches geringer als eine Länge jeder einzelnen Leiterplatte 4.

Abweichend vom Ausführungsbeispiel ist es auch denkbar, dass mit dem Lichtleiter 2, und zwar vorzugsweise mit diesem verklipst (wie in Fig. 2 dargestellt), nicht nur drei starre Leiterplatten 4, sondern noch kürzere, ebenso starre Leiterplatten aneinandergereiht und miteinander ebenfalls über Kabel 3 verbunden werden (nicht näher dargestellt). Vorzugsweise ist es dabei denkbar, dass neun Leiterplatten angereiht werden und jede Leiterplatte nur einen Treiberbaustein T aufweist, dem jeweils nur sechs LEDs 40 zur Ansteuerung zugeordnet sind.

Der Vorteil bei dieser Lösung liegt in einer erhöhten Flexibilität der Anordnung, während der Vorteil der Aneinanderreihung von nur drei Leiterplatten 4 im erleichterten Handling liegt.

### Bezugszeichenliste

- 1, 1`: Beleuchtungseinheit
- 2: Lichtleiter
- 3: Kabel
- 4: Leiterplatten
- 10: blendenartiges Bauteil
- 20: Grundkörper
- 21: Lichteinkoppelfläche
- 22: Lichtauskoppelfläche
- 40: Leuchtdioden
- A: Winkelversatz
- F: Fahrtrichtung
- L: Licht
- I: Längsrichtung
- r1, r2: Radien
- T: Treibereinheiten
- W: Windschutzscheibe

- Δd: Dickenänderung

## Patentansprüche

1. Beleuchtungseinheit (1; 1') für ein Kraftfahrzeug aus wenigstens einem Lichtleiter (2) und wenigstens einer wenigstens eine Leuchtdiode (40) aufweisenden Leiterplatte (4), wobei die Leiterplatte (4) und der Lichtleiter (2) aneinander befestigt sind, wobei die Beleuchtungseinheit (1, 1') längsförmig und sichelartig gebogen ausgebildet ist mit einem sich über eine Länge (I) der Beleuchtungseinheit (1,1') erstreckenden Lichtleiter (2) und mehreren länglichen, starren Leiterplatten (4), die jeweils mit mehreren Leuchtdioden (40) bestückt sind, wobei die Leiterplatten (4) identisch aufgebaut und in ihrer Längsrichtung entlang dem Lichtleiter (2) aneinandergereiht sind, derart, dass Licht (L) der Leuchtdioden (40) senkrecht zur Längserstreckung des Lichtleiters (2) in diesen einkoppelbar ist, und wobei die Leiterplatten (4) über Kabel (3) elektrisch und signaltechnisch miteinander verbunden sind, **dadurch gekennzeichnet dass** die Leiterplatten (2) im Umriss jeweils eine gebogene Form mit einem Krümmungsradius (r1, r2) aufweisen.

2. Beleuchtungseinheit (1, 1') nach Anspruch 1, **dadurch gekennzeichnet, dass** die Leiterplatten (4) über die Kabel (3) im Bereich ihrer gegenüberliegenden Enden (E) verbunden sind, wobei die gegenüberliegenden Enden (E) aneinander anliegen oder allenfalls nur in einem solchen geringen Abstand gegenüberliegen, der ein Vielfaches kleiner ist als eine Länge einer Leiterplatte (4).

3. Beleuchtungseinheit (1,1') nach einem der vorhergehenden Ansprüche, **dadurch gekennzeichnet, dass** jede Leiterplatte (2) mehrere Treibereinheiten (T) aufweist, wobei jeder Treibereinheit (T) ein Teil von den mehreren Leuchtdioden (40) der Leiterplatte (2) zur Ansteuerung der Leuchtdioden (40) zugeordnet ist.

4. Beleuchtungseinheit (1, 1') nach Anspruch 3, **dadurch gekennzeichnet, dass** drei Leiterplatten (4) vorhanden sind und auf jeder Leiterplatte (4) achtzehn Leuchtdioden (40) und drei Treibereinheiten (T) angeordnet sind, wobei jeder Treibereinheit (T) jeweils 6 Leuchtdioden (40) zugeordnet sind.

5. Beleuchtungseinheit (1, 1') nach einem der vorhergehenden Ansprüche, **dadurch gekennzeichnet, dass** jede Leiterplatte (4) eine Treibereinheit (T) aufweist, wobei der Treibereinheit (T) alle Leuchtdioden (40) der Leiterplatte (4) zur Ansteuerung zugeordnet sind.

6. Beleuchtungseinheit (1,1') nach Anspruch 5, **dadurch gekennzeichnet, dass** neun Leiterplatten (4) vorhanden sind und auf jeder Leiterplatte (4) sechs Leuchtdioden (40) angeordnet sind, die der Treibereinheit (T) zur Ansteuerung zugeordnet sind.

7. Kraftfahrzeug, **gekennzeichnet durch** wenigstens eine Beleuchtungseinheit (1, 1') nach einem der vorhergehenden Ansprüche.

## Claims

1. Lighting unit (1; 1') for a motor vehicle, formed from at least one light guide (2) and at least one circuit board (4) having at least one light-emitting diode (40), wherein the circuit board (4) and the light guide (2) are attached to one another, wherein the lighting unit (1, 1') is designed to be elongate and bent in the manner of a sickle with a light guide (2), extending over a length (1) of the lighting unit (1, 1'), and a plurality of elongate, rigid circuit boards (4), on each of which a plurality of light-emitting diodes (40) are mounted, wherein the circuit boards (4) have an identical construction and are arranged in a row in the longitudinal direction along the light guide (2) in a manner such that light (L) from the light-emitting diodes (40) is couplable perpendicular to the longitudinal extent of the light guide (2) into the latter, and wherein the circuit boards (4) are connected to one another electrically and for the transmission of signals via cables (3), **characterized in that** the circuit boards (2) each have in terms of their outline a curved shape having a radius of curvature (r1, r2).

2. Lighting unit (1, 1') according to Claim 1, **characterized in that** the circuit boards (4) are connected via the cables (3) in the region of their opposite ends (E), wherein the opposite ends (E) lie one against the other or at most lie opposite one another with only a small distance which is multiple times smaller than a length of a circuit board (4).

3. Lighting unit (1, 1') according to either of the preceding claims, **characterized in that** each circuit board (2) has a plurality of driver units (T), wherein each driver unit (T) is assigned some of the plurality of light-emitting diodes (40) of the circuit board (2) for controlling the light-emitting diodes (40).

4. Lighting unit (1, 1') according to Claim 3, **characterized in that** three circuit boards (4) are present and 18 light-emitting diodes (40) and three driver units (T) are arranged on each circuit board (4), wherein each driver unit (T) is assigned in each case 6 light-emitting diodes (40).

5. Lighting unit (1, 1') according to any of the preceding claims, **characterized in that** each circuit board (4) has a driver unit (T), wherein the driver unit (T) is assigned all the light-emitting diodes (40) of the circuit board (4) for controlling them.

6. Lighting unit (1, 1') according to Claim 5, **characterized in that** nine circuit boards (4) are present and six light-emitting diodes (40) are arranged on each circuit board (4), the light-emitting diodes being assigned to the driver unit (T) for being controlled by the latter.

7. Motor vehicle **characterized by** at least one lighting unit (1, 1') according to any of the preceding claims.

## Revendications

1. Unité d'éclairage (1 ; 1') destinée à un véhicule automobile, ladite unité d'éclairage comprenant au moins un guide de lumière (2) et au moins une carte de circuit imprimée (4) comportant au moins une diode électroluminescente (40), la carte de circuit imprimé (4) et le guide de lumière (2) étant fixés l'un à l'autre, l'unité d'éclairage (1, 1') étant conçue pour être allongée et falciforme, et comprenant un guide de lumière (2), qui s'étend sur une longueur (I) de l'unité d'éclairage (1, 1'), et plusieurs cartes de circuit imprimé (4) allongées et rigides qui sont équipées chacune de plusieurs diodes électroluminescentes (40), les cartes de circuit imprimé (4) ayant une structure identique et étant disposées en série dans leur direction longitudinale le long du guide de lumière (2) de manière à ce que la lumière (L) des diodes électroluminescentes (40) puisse être injectée par couplage dans le guide de lumière (2) perpendiculairement à l'extension longitudinale du guide de lumière (2), et les cartes de circuit imprimé (4) étant reliées entre elles électriquement et techniquement en termes de signaux par des câbles (3), **caractérisée en ce que** les cartes de circuit imprimé (2) présentent chacune un contour incurvé de rayon de courbure (r1, r2).

2. Unité d'éclairage (1, 1') selon la revendication 1, **caractérisée en ce que** les cartes de circuit imprimé (4) sont reliées par les câbles (3) au niveau de leurs extrémités opposées (E), les extrémités opposées (E) venant en appui l'une contre l'autre ou n'étant opposées l'une à l'autre qu'à une distance si petite qui est plusieurs fois inférieure à la longueur d'une carte de circuit imprimé (4).

3. Unité d'éclairage (1, 1') selon l'une des revendications précédentes, **caractérisée en ce que** chaque carte de circuit imprimé (2) comporte plusieurs unités d'attaque (T), chaque unité d'attaque (T) étant associée à une partie des plusieurs diodes électroluminescentes (40) de la carte de circuit imprimé (2) afin de commander les diodes électroluminescentes (40).

4. Unité d'éclairage (1, 1') selon la revendication 3, **caractérisée en ce que** trois cartes de circuit imprimé (4) sont prévues et dix-huit diodes électroluminescentes (40) et trois unités d'attaque (T) sont disposées sur chaque carte de circuit imprimé (4), chaque unité d'attaque (T) étant associée à 6 diodes électroluminescentes (40).

5. Unité d'éclairage (1, 1') selon l'une des revendications précédentes, **caractérisée en ce que** chaque carte de circuit imprimé (4) comporte une unité d'attaque (T), toutes les diodes électroluminescentes (40) de la carte de circuit imprimé (4) étant associées à l'unité d'attaque (T) à des fins de commande.

6. Unité d'éclairage (1, 1') selon la revendication 5, **caractérisée en ce que** neuf cartes de circuit imprimé (4) sont prévues et six diodes électroluminescentes (40), qui sont associées à l'unité d'attaque (T) à des fins de commande, sont disposées sur chaque carte de circuit imprimé (4).

7. Véhicule automobile, **caractérisé par** au moins une unité d'éclairage (1, 1') selon l'une des revendications précédentes.
